# EUROPÄISCHE PATENTANMELDUNG

(11) **EP 3 527 332 A1**
(43) Veröffentlichungstag der Anmeldung: **21.08.2019**
(21) Anmeldenummer: 18157588.7
(22) Anmeldetag: 20.02.2018
(51) Int. Cl.: B25J 9/16, F16P 3/14, G01S 17/93, G01S 13/93

(54) **SICHERE SENSORVORRICHTUNG UND VERFAHREN ZUR ABSICHERUNG EINER BEWEGLICHEN MASCHINE**

(71) Anmelder: Sick AG, 79183 Waldkirch (DE)
(72) Erfinder: Hofmann, Christoph, 79183 Waldkirch (DE); Prinz, Oliver, 79183 Waldkirch (DE)

(57) **Zusammenfassung**

Es wird eine sichere Sensorvorrichtung (10) zur Montage an einer beweglichen Maschine (46) zu deren Absicherung angegeben, die einen optoelektronischen Abstandssensor (12) zur Erfassung von Objekten (24) in einer Umgebung (22) der Maschine (46) und zum Messen eines Abstands (s) zu den Objekten (24) sowie eine Steuer- und Auswertungseinheit (16) aufweist, die dafür ausgebildet ist, ein sicherheitsgerichtetes Signal zu erzeugen, sobald ein Objekt (24) zu nahe kommt. Dabei weist die Sensorvorrichtung (10) weiterhin einen Radarsensor (14) auf, um den Abstand (s) zu den Objekten (24) und/oder die Geschwindigkeit (v) der Objekte (24) zu messen.

## Beschreibung

Die Erfindung betrifft eine sichere Sensorvorrichtung und ein Verfahren zur Absicherung einer beweglichen Maschine nach dem Oberbegriff von Anspruch 1 beziehungsweise 11.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Herkömmlich werden vor allem optoelektronische Sensoren wie Lichtgitter oder Laserscanner für eine sicherheitstechnische Überwachung eingesetzt. In jüngerer Zeit treten 3D-Kameras hinzu. Ein gängiges Absicherungskonzept sieht vor, dass Schutzfelder konfiguriert werden, die während des Betriebs der Maschine vom Bedienpersonal nicht betreten werden dürfen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

In der sicherheitstechnischen Überwachung von Robotern, speziell Leichtbaurobotern, besteht ein zunehmender Wunsch nach engerer Zusammenarbeit mit Personen (MRK, Mensch-Roboter-Kollaboration). Dafür sind Schutzfelder vielfach zu unflexibel. Die Norm EN 15066:2016 schlägt ein alternatives Sicherheitskonzept für Roboter vor, bei dem geprüft wird, ob ein Sicherheitsabstand zwischen Arbeiter und Roboter eingehalten ist (Separation Monitoring). In die Berechnung des erforderlichen Sicherheitsabstands gehen verschiedene Beiträge der Bewegung des Arbeiters, der Eigenbewegung des Roboters, Nachlaufwege, Ansprechzeiten und Sicherheitszuschläge ein.

In die Sicherheitsbetrachtung kann erweiternd die Geschwindigkeit des Arbeiters einbezogen werden, genauer die Komponente der Geschwindigkeit auf der Verbindungslinie von Roboter zu Arbeiter (Speed and Separation Monitoring). Diese Geschwindigkeit verschärft oder erleichtert je nach Betrag und Vorzeichen die Anforderung an den jeweils einzuhaltenden Sicherheitsabstand. Dadurch entfallen Worst-Case-Annahmen, und solange keine Gefahr besteht, können sich im Rahmen der Zusammenarbeit Mensch und Maschine auch sehr stark annähern.

Um dieses Sicherheitskonzept in einer realen Anwendung nutzen zu können, muss zumindest der Abstand zuverlässig gemessen werden, d.h. sicher im Sinne der einschlägigen Sicherheitsnormen. Herkömmliche Abstandssensoren bringen jedoch diese Sicherheit nicht mit. In der EN 13849, ähnlich auch in der erst im Entwurfsstadium vorliegenden EN 62998 ist erwähnt, dass ein zweikanaliges, mittels diversitärer Einzelsensoren realisiertes Sensorsystem zu erhöhten Sicherheitslevels führt. Das ist aber nicht mehr als ein abstrakter Hinweis.

Aus der DE 10 2015 112 656 A1 ist ein sicherer optoelektronischer Distanzsensor bekannt, mit dem ein Schutzbereich an einem bewegbaren Maschinenteil überwacht wird. Aufgrund des ausschließlich optischen Sensorverfahrens können sich dabei Schwierigkeiten in der Erfassung ergeben, etwa bei Einsätzen in staubigen Umgebungen oder im Außeneinsatz. Weiterhin werden klassisch Schutzfelder überwacht und dafür nur Distanzen gemessen.

Die EP 2 863 176 A2 offenbart einen Sensor mit einer um eine Drehachse beweglichen Abtasteinheit, in der verschiedene Erfassungseinheiten untergebracht werden. Erwähnt sind Erfassungseinheiten für Lichtlaufzeit, RFID und Radar. Mit Lichtlaufzeitmessung entsteht ein Laserscanner, und es wird auf die Möglichkeit verwiesen, durch zwei derartige Erfassungseinheiten mit unterschiedlicher Hardware oder unterschiedlichen Algorithmen eine diversitäre Redundanz zu erzielen. Damit wird dann möglicherweise aus dem Laserscanner ein sicherer Laserscanner, der aber letztlich vor denselben Schwierigkeiten steht wie der Distanzsensor nach DE 10 2015 112 656 A1, mit dem zusätzlichen Nachteil, dass sich die drehende Plattform nicht als kompakter, leichter Sensor zur Montage auf einem Roboter eignet.

Es ist daher Aufgabe der Erfindung, eine verbesserte Absicherung einer beweglichen Maschine anzugeben, insbesondere eines Roboters.

Diese Aufgabe wird durch eine sichere Sensorvorrichtung und ein Verfahren zur Absicherung einer beweglichen Maschine beziehungsweise eines Roboters nach Anspruch 1 beziehungsweise 11 gelöst. Ein optoelektronischer Abstandssensor erfasst Objekte in Umgebung der Maschine und misst deren Abstand zu sich selbst und damit zu seinem Montageort an der Maschine. Ein Offset beispielsweise zu einer Werkzeugspitze oder einer sonstigen eigentlichen Gefahrenquelle kann zusätzlich berücksichtigt werden. Eine Steuer- und Auswertungseinheit löst ein sicherheitsgerichtetes Signal aus, falls ein Sicherheitsabstand nicht eingehalten ist, der Abstand eines erfassten Objekts also zu klein wird. Das sicherheitsgerichtete Signal wird beispielsweise an eine Maschinensteuerung weitergeleitet, woraufhin die Maschine stoppt, ausweicht, verlangsamt oder in eine sichere Position verfährt.

Die Erfindung geht nun von dem Grundgedanken aus, zusätzlich für eine diversitär-redundante Messung einen Radarsensor einzusetzen. Der Radarsensor misst Abstand und/oder Geschwindigkeit der Objekte in der Umgebung der Maschine. Das Ergebnis dieser Messung fließt in die Überprüfung des Sicherheitsabstands der Steuer- und Auswertungseinheit ein.

Je nach Ausprägung des Radarsensors sind verschiedene Konstellationen denkbar. Wenn der Radarsensor nur Abstände misst, ist die Sensorvorrichtung insgesamt für eine diversitär-redundante Abstandsmessung auf Basis von Licht und Radar ausgebildet, die den Anforderungen an eine erhöhte Sicherheitsstufe entspricht. Der Radarsensor ist alternativ in der Lage, die Geschwindigkeit der Objekte direkt zu messen. Das ermöglicht eine deutlich verbesserte Betrachtung von Sicherheitsabständen mit einer Abhängigkeit von der Geschwindigkeit des Objekts (SSM, Speed and Separation Monitoring), wobei beide Einflussgrößen Abstand und Geschwindigkeit mit passendem Sensorprinzip direkt gemessen sind. Schließlich ist denkbar, dass der Radarsensor sowohl Abstände als auch Geschwindigkeiten misst. Dann sind sogar drei unterschiedliche Messverfahren diversitär-redundant kombiniert, nämlich zwei Abstandsmessungen mit Licht und Radar und eine Geschwindigkeitsmessung mit Radar, so dass die Zuverlässigkeit und damit ein mögliches Sicherheitslevel besonders hoch wird.

Die Erfindung hat den Vorteil, dass durch eine Sensorfusion aus optischem Sensor und Radar kinematische Parameter eines Objekts, nämlich Ort und Geschwindigkeit, zweikanalig und diversitär gemessen werden. Durch ein direktes Vermessen der erforderlichen Größen ist eine situative Gefährdungsbeurteilung möglich, die minimale Abstände zwischen Mensch und Maschine beziehungsweise Roboter erlaubt. Herkömmlich sind dagegen keine zweikanaligen Messungen und stattdessen nur Worst-Case-Abschätzungen vorgesehen. Das bedeutet erhebliche Sicherheitsaufschläge, die ein enges Zusammenarbeiten kaum zulassen. Die beiden Sensorprinzipien haben sehr unterschiedliche Stärken und Schwächen und ergänzen einander daher sehr gut, so dass neben dem Innenbereich auch Außenanwendungen (Outdoor) erschlossen werden. Beide Sensoren können kostengünstig, klein, kompakt und mit sehr geringem Gewicht gebaut werden. Der Bewegungsfreiraum der Maschine wird dadurch so gut wie nicht beschränkt, und gerade für Leichtbauroboter wird deren geringe handhabbare Traglast kaum beeinträchtigt.

Der Radarsensor ist bevorzugt für eine Abstandsmessung mit einem Laufzeitverfahren ausgebildet. Dabei wird ein kurzer Puls ausgesandt und empfangen (Impulsradar), oder es wird eine Phasenverschiebung zwischen ausgesandtem und empfangenem Radarsignal gemessen (CW-Radar). Bekannt ist auch eine meist lineare Frequenzmodulation, wobei dann die Frequenzverschiebung zwischen Sende- und Empfangssignal ausgewertet wird (FMCW-Radar). Mit einem Laufzeitverfahren des Radarsensors erfolgt eine diversitär-redundante zweite Abstandsmessung zusätzlich zu derjenigen des optoelektronischen Abstandssensors.

Der Radarsensor ist bevorzugt für eine Geschwindigkeitsmessung mit einem Dopplerverfahren ausgebildet. Ein Radarsensor ist in der Lage, die Geschwindigkeit direkt zu messen, indem in an sich bekannter Weise die Dopplerverschiebung des empfangenen Signals ausgemessen wird. Damit sind mit dem Abstand, der von dem optoelektronischen Abstandssensor gemessen ist, und der von dem Radarsensor gemessenen Geschwindigkeit beide kinematischen Einflussgrößen für ein Speed and Separation Monitoring direkt gemessen, und zwar diversitär. Der Radarsensor misst auch direkt die relevante Geschwindigkeitskomponente auf der Verbindungslinie zwischen Sensorvorrichtung und Objekt. Laterale Geschwindigkeitskomponenten beeinflussen die Gefahr nicht oder jedenfalls in viel geringerem Maße und gehen daher auch in die Betrachtungen der EN 15066:2016 zum Sicherheitsabstand nicht ein.

Die Steuer- und Auswertungseinheit ist bevorzugt dafür ausgebildet, das sicherheitsgerichtete Signal in Abhängigkeit von Abstand und Geschwindigkeit der erfassten Objekte zu erzeugen. Somit nutzt die Steuer- und Auswertungseinheit beide kinematischen Größen Abstand und Geschwindigkeit aus. Damit wird die zusätzliche Information der Geschwindigkeit ausgenutzt, um eine engere Kollaboration zu ermöglichen. Es muss nicht immer ein auf Worst-Case-Annahmen der Objektgeschwindigkeit beruhender Sicherheitsabstand eingehalten werden, falls das Objekt sich gemäß der Messung tatsächlich langsamer oder sogar von der Maschine fort bewegt.

Die Steuer- und Auswertungseinheit ist bevorzugt dafür ausgebildet, aus Abständen und/oder Geschwindigkeiten der erfassten Objekte einen Steuerbefehl zu erkennen. Damit wird eine Zusatzfunktion neben der Sicherheitsfunktion realisiert. Vorzugsweise besitzt der optoelektronische Abstandssensor eine Ortsauflösung, um mehr Muster von Abständen zu identifizieren. Auf diese Weise wird eine Gestenerkennung möglich. Insbesondere werden intuitive Befehle an die Maschine möglich, etwa ein berührungsloses Wegschieben eines Roboters mit offener Handfläche.

Die Steuer- und Auswertungseinheit ist bevorzugt dafür ausgebildet, die Geschwindigkeit erfasster Objekte aus einer zeitlichen Ableitung mehrerer Abstandsmessungen zu bestimmen. Das ist eine alternative oder zusätzliche Möglichkeit der Geschwindigkeitsbestimmung, die aber im Gegensatz zu einer direkten Messung beispielsweise mit einem Dopplerverfahren nur indirekt und damit möglicherweise ungenauer ist. Außerdem kommt ein Dopplerverfahren mit einer Messung und damit einer kürzeren Mess- und Verarbeitungszeit aus, da nicht zu mehreren Zeitpunkten gemessen und daraus erst Abstand bestimmt und dann die Ableitung gebildet werden muss. Geht man den Weg über Abstandswerte, aus denen die Ableitung gebildet wird, so können diese von dem optoelektronischen und/oder dem Radarsensor geliefert werden. Dadurch entsteht zusätzliche diversitäre Redundanz und damit das Potential für höhere erreichbare Sicherheitslevel.

Die Steuer- und Auswertungseinheit ist bevorzugt dafür ausgebildet, die Beschleunigung erfasster Objekte aus einer zeitlichen Ableitung mehrerer Geschwindigkeitsmessungen zu bestimmen. Grundlage dafür kann sowohl eine direkte Geschwindigkeitsmessung des Radarsensors als auch eine indirekte Geschwindigkeitsbestimmung aus der zeitlichen Ableitung von Abstandswerten des Radarsensors und/oder des optoelektronischen Abstandssensors sein. Mit Abstand, Geschwindigkeit und Beschleunigung sind die gängigen kinematischen Parameter vollständig und durch diversitäre Redundanz auch sicher erfasst. Die Beschleunigung kann für eine weitere Modifikation der Betrachtung von Sicherheitsabständen genutzt werden, die ein Speed and Separation Monitoring nochmals verfeinert. Prinzipiell könnten auch noch weitere zeitliche Ableitungen der kinematischen Parameter bestimmt und berücksichtigt werden.

Der optoelektronische Abstandssensor umfasst vorzugsweise einen Lichtsender, einen Lichtempfänger und eine Lichtauswertungseinheit, die dafür ausgebildet ist, einen Abstand aus einer Lichtlaufzeit eines von dem Lichtsender ausgesandten und in dem Lichtempfänger wieder empfangenen Lichtsignals zu bestimmen. Es handelt sich folglich um einen Lichtlaufzeitsensor (TOF, Time of Flight). Eine alternative optische Abstandsmessung basiert auf Triangulation mit einem Lichtsender und einem Lichtempfänger in biaxialer Anordnung und Auswertung der abstandsabhängigen lateralen Ablage eines Empfangslichtflecks.

Die Sensorvorrichtung weist bevorzugt mindestens einen weiteren Sensor für eine Bestimmung einer Eigenbewegung der beweglichen Maschine auf. Insbesondere Roboter führen in aller Regel sehr kontrollierte, kalibrierte und bekannte Bewegungen aus und besitzen oft auch eine eigene Sensorik zu deren Überwachung, etwa Drehgeber an den Gelenken. Derartige Informationen können verwendet werden, um in die Betrachtung der Sicherheitsabstände auch eine tatsächliche Bewegung der Maschine anstelle von Worst-Case-Annahmen einfließen zu lassen.

In bevorzugter Weiterbildung ist eine bewegliche Maschine vorgesehen, an der eine erfindungsgemäße Sensorvorrichtung montiert ist. Ist die Maschine ein Roboterarm, so ist eine besonders bevorzugte Montageposition an dessen Spitze in unmittelbarer Nähe zu einem Werkzeug, welches die größte Gefahrenquelle darstellt (EOAS, End-ofarm Safeguarding). Es ist aber ebenso möglich, eine andere Position am Roboter, die resultierende Gesamtbewegung eines insgesamt beweglichen Roboters oder eine andere Maschine zu überwachen, etwa ein autonomes Fahrzeug (AGV, Automated Guided Vehicle, AGC, Automated Guided Cart) oder eine Drohne zur Kollisionsvermeidung.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung einer Sensorvorrichtung mit einem Radarsensor und einem optoelektronischen Abstandssensor;
- Fig. 2: eine Darstellung der Erfassungsbereiche von optoelektronischem Abstandssensor und Radarsensor und der davon gemessenen Abstände und Geschwindigkeiten; und
- Fig. 3: eine schematische Darstellung der Montage einer Sensorvorrichtung an einem Roboterarm.

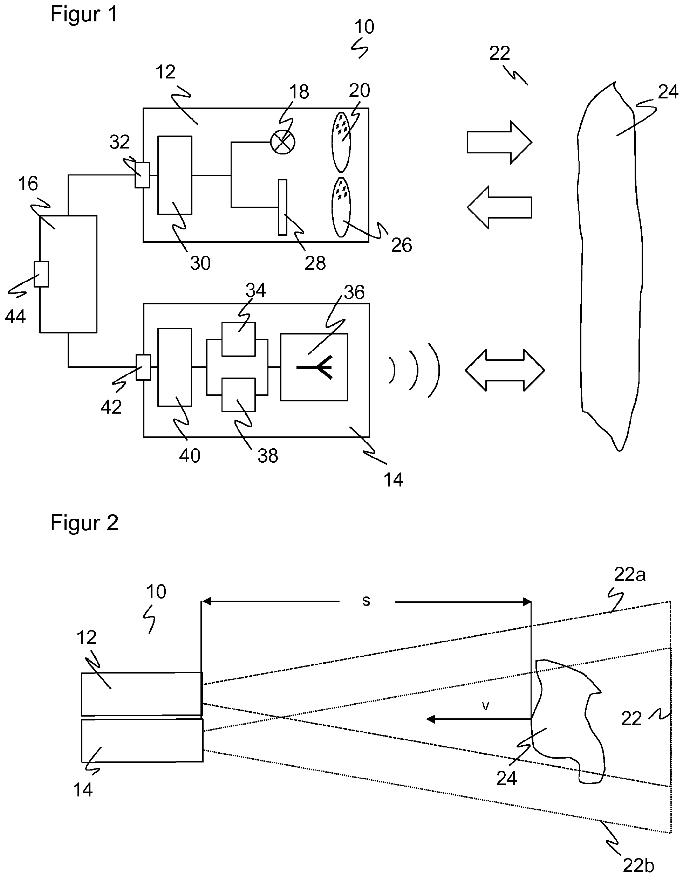

Figur 1 zeigt eine vereinfachte Blockdarstellung einer sicheren Sensorvorrichtung 10 mit einem optoelektronischen Abstandssensor 12 und einen Radarsensor 14. Die beiden Sensoren 12, 14 sind an eine gemeinsame Steuer- und Auswertungseinheit 16 angeschlossen.

In dem optoelektronischen Abstandssensor 12 sendet ein Lichtsender 18, beispielsweise eine LED oder eine Laserlichtquelle, über eine Sendeoptik 20 ein Lichtsignal in einen Überwachungsbereich 22 aus. Trifft es dort auf ein Objekt 24, so wird ein Teil des Lichtsignals remittiert oder reflektiert und kehrt durch eine Empfangsoptik 26 zu einem Lichtempfänger 28 zurück. Der Lichtempfänger 28 ist beispielsweise eine Photodiode, eine APD (Avalanche Photo Diode) oder ein SPAD-Detektor (Single-Photon Avalanche Diode) mit einem oder mehreren Lichtempfangselementen.

Das Empfangssignal des Lichtempfängers 28 wird von einer Lichtauswertungseinheit 30 ausgelesen, die auch den Lichtsender 18 steuert. Um den Abstand zu dem Objekt 24 zu messen, wird in der Lichtauswertungseinheit 30 eine Lichtlaufzeit von Aussenden eines Lichtsignals bis zu dessen Empfang bestimmt und diese über die Lichtgeschwindigkeit in einen Abstand umgerechnet. Dazu werden in einem Pulsverfahren einzelne oder Folgen von Lichtpulsen erzeugt und wieder empfangen, deren Laufzeiten einzeln oder in einem Pulsmittelungsverfahren bestimmt werden, oder das Lichtsignal wird in einem Phasenverfahren periodisch amplitudenmoduliert, um den Phasenversatz zwischen ausgesandtem und empfangenen Lichtsignal auszuwerten. Der jeweils gemessene Abstand wird über eine erste Schnittstelle 32 ausgegeben.

Der als biaxialer Lichtlaufzeittaster ausgebildete optoelektronische Abstandssensor 12 ist nur als Beispiel zu verstehen. Es sind auch andere, insbesondere koaxiale Anordnungen von Lichtsender 18 und Lichtempfänger 28, andere Optiken und sogar andere optische Messprinzipien anstelle eines Lichtlaufzeitverfahrens denkbar, etwa mittels eines Triangulationstasters. Außerdem können beispielsweise durch modulare Mehrfachanordnung von mehreren optoelektronischen Abstandssensoren 12 oder eine Ortsauflösung des Lichtempfängers 28 auch mehrere Objekte 24 in einem größeren und nicht lediglich eindimensionalen Überwachungsbereich 22 erfasst werden. Eine mögliche Implementierung des optoelektronischen Abstandssensors 12 ist diejenige, die in der einleitend zitierten DE 10 2015 112 656 A1 vorgestellt wird, oder ein 3D-Kamerasystem.

In dem Radarsensor 14 andererseits erzeugt ein Mikrowellensender 34 mit Hilfe einer Antenne 36 ein Radarsignal, welches gleichzeitig oder alternierend mit dem Lichtsignal des Lichtsenders 18 in den Überwachungsbereich 22 ausgesandt wird. Auch das Radarsignal wird an dem Objekt 24 reflektiert, wobei der große Versatz zwischen Licht- und Radarsignal an dem Objekt 24 tatsächlich kein praktisch relevanter Versatz ist, sondern dem darstellungsbedingt in Figur 1 extrem kurzen Objektabstand geschuldet ist. Das Radarsignal beleuchtet zudem das Objekt 24 vorzugsweise großflächig. Es kehrt dann ein Teil des Radarsignals zu dem Radarsensor 14 zurück, wo über die Antenne 36 und einen Mikrowellenempfänger 38 ein Empfangssignal erzeugt und einer Radarauswertungseinheit 40 zugeführt wird.

Die Radarauswertungseinheit 40 ist für die Bestimmung des Abstands zu dem Objekt 24 und/oder von dessen Geschwindigkeit aus dem Empfangssignal ausgebildet. Das basiert in der Regel auf einem Zusammenspiel mit einer geeigneten Modulation des ausgesandten Radarsignals. Einige Beispiele für Abstandsmessverfahren mit Radar sind ein Pulsverfahren mit Bestimmung der Laufzeit eines Sendepulses, ein Phasenverfahren mit periodischer Modulation des ausgesandten Radarsignals und Bestimmung der Phasendifferenz zu dem Empfangssignal sowie eine rampenartige Frequenzmodulation mit Auswertung der Frequenz des Empfangssignals (FMCW). Die Geschwindigkeit wird vorzugsweise mit einem Dopplerverfahren gemessen, wofür ein CW-System ohne Modulation genügt. Die gemessenen Abstands- und/oder Geschwindigkeitswerte werden über eine zweite Schnittstelle 42 ausgegeben.

Abweichend von der Darstellung in Figur 1 können Mikrowellensender 34 und Mikrowellenempfänger 38 jeweils eine eigene Sende- beziehungsweise Empfangsantenne aufweisen. Umgekehrt ist in vielen Ausführungsformen anstelle eines separaten Mikrowellensenders 34 und Mikrowellenempfängers 38 ein Transceiver vorgesehen. Durch Richtwirkung der Antenne 36 beziehungsweise eine Antennenlinse lässt sich eine Anpassung an einen gewünschten Überwachungsbereich 22 erreichen, der möglichst stark mit demjenigen des optoelektronischen Abstandssensors 12 überlappt. Es sind auch Mehrfachanordnungen von Antennen insbesondere mit wechselnder effektiver Abstrahl- und Erfassungsrichtung durch phasenversetzte Ansteuerung (phased array) möglich.

Sowohl optoelektronische Abstandsmessung als auch Radar sind seit langem in vielfältigen Bauweisen bekannt, so dass der Aufbau und das Messprinzip der beiden Sensoren 12, 14 jeweils nur grob und beispielhaft beschrieben sind. Die Erfindung ist deshalb keineswegs auf die konkret gezeigte Variante in Figur 1 beschränkt.

Die gemeinsame Steuer- und Auswertungseinheit 16 empfängt über die Schnittstellen 32, 42 die optisch und/oder mittels Radar gemessenen Abstands- und Geschwindigkeitswerte. Um die Messwerte gemeinsam verarbeiten zu können, findet vorzugsweise eine Kalibrierung von Abstandssensor 12 und Radarsensor 14 statt, die deren relative Positionen berücksichtigt, so dass ein gegenseitiger Versatz beziehungsweise eine Umrechnung in ein gemeinsames Koordinatensystem entweder schon bei den empfangenen Messwerten stattgefunden hat oder nun von der gemeinsamen Steuer- und Auswertungseinheit 16 vorgenommen wird. In einer Ausführungsform ist die gemeinsame Steuer- und Auswertungseinheit 16 in der Lage, durch zeitliche Ableitung aus mehreren Abstandsmessungen, deren Quelle der optoelektronische Abstandssensor 12 und/oder der Radarsensor 14 sein kann, eine Geschwindigkeit zu bestimmen. Mindestens eine weitere zeitliche Ableitung von Geschwindigkeitswerten ist denkbar, mit der dann eine Beschleunigung bestimmt ist. Die der Beschleunigungsbestimmung zugrunde gelegten Geschwindigkeitswerte können mittels zeitlicher Ableitung aus Abstandswerten oder direkt von dem Radarsensor 14 gemessen sein, oder eine Mischung davon.

Somit stehen die diversitär-redundant gemessenen kinematischen Größen Abstand, Geschwindigkeit und Beschleunigung, genaugenommen als relative Größen bezogen auf die Sensorvorrichtung 10, oder eine Teilauswahl davon zur Verfügung, die so an einem Ausgang 44 bereitgestellt werden können. Je nach Ausführungsform findet schon in der gemeinsamen Steuer- und Auswertungseinheit 16 ein Abgleich diversitär-redundant optisch und mittels Radar gemessener Größen statt, oder es werden jeweils beide Messungen nach außen weitergeleitet. Damit die Sensorvorrichtung 10 eine sichere Sensorvorrichtung 10 im Sinne der einleitend genannten oder vergleichbarer Normen wird, ist die gemeinsame Steuer- und Auswertungseinheit 16 samt Ausgang 44 vorzugsweise in sich sicher, beispielsweise zweikanalig oder selbsttestend ausgebildet. Die beiden Sensoren 12, 14 müssen aufgrund des diversitär-redundanten Aufbaus selbst nicht zwingend in diesem Sinne sicher sein, aber wenn sie es sind, wird insgesamt ein noch höherer Sicherheitslevel möglich.

In einer weiteren Ausführungsform wertet die gemeinsame Steuer- und Auswertungseinheit 16 die erfassten oder berechneten kinematischen Größen selbst im Hinblick auf eine mögliche Gefährdung durch das Objekt 24 beziehungsweise des Objekts 24 aus. Dazu wird geprüft, ob ein Sicherheitsabstand gewahrt bleibt (Separation Monitoring), bevorzugt ein Sicherheitsabstand, der von der Geschwindigkeit des Objekts 24 abhängt (Speed and Separation Monitoring). In weiteren Ausführungsformen kann auch die Beschleunigung noch berücksichtigt werden. Der Ausgang 44 kann in diesem Fall ein sicherer binärer Ausgang sein, an dem bei erkannter Gefahr ein sicherheitsgerichtetes Signal ausgegeben wird (OSSD, Output Signal Switching Device). Das sicherheitsgerichtete Signal stoppt eine überwachte Maschine oder bringt sie anderweitig in einen sicheren Zustand, welcher die erkannte Gefährdung bereinigt. Alternativ finden solche Auswertungen nachgelagert in einem übergeordneten System statt, insbesondere einer Sicherheitssteuerung, die an den Ausgang 44 angeschlossen ist, an dem die kinematischen Größen bereitgestellt werden.

Die beiden Sensoren 12, 14 und die gemeinsame Steuer- und Auswertungseinheit 16 sind in Figur 1 als eigene Einheiten dargestellt. Alternativ ist denkbar, diese Funktionalität in einen der Sensoren 12, 14 zu integrieren. Umgekehrt kann auch zumindest einer der Sensoren 12, 14 seine Empfangssignale unmittelbar an die gemeinsame Steuer- und Auswertungseinheit 16 weitergeben, die dann die Funktion der Lichtauswertungseinheit 30 beziehungsweise der Radarauswertungseinheit 40 übernimmt. Weitere Zwischenformen mit anders verteilten Auswertungs- und Steuerungsfunktionen sind auch möglich. Die beiden Sensoren 12, 14 und die gemeinsame Steuer- und Auswertungseinheit 16 können jeweils ein eigenes Gehäuse aufweisen, oder es gibt ein gemeinsames Gehäuse für zwei oder sogar alle drei dieser Komponenten.

Figur 2 zeigt die Sensorvorrichtung 10 und deren Überwachungsbereich 22 nochmals in einer sehr vereinfachten Darstellung, in der die beiden Sensoren 12, 14 lediglich durch einen Kasten repräsentiert sind. Die Sensoren 12, 14 haben jeweils einen eigenen Erfassungsbereich 22a-b, die jedoch einen möglichst großen Überlappungsbereich als den eigentlichen, zweikanalig erfassten Überwachungsbereich 22 bilden. Illustriert sind weiterhin der gemessene Abstand s zu dem Objekt 24 sowie dessen Geschwindigkeitskomponente v in Richtung auf die Sensorvorrichtung 10 zu beziehungsweise je nach Vorzeichen auch von ihr weg.

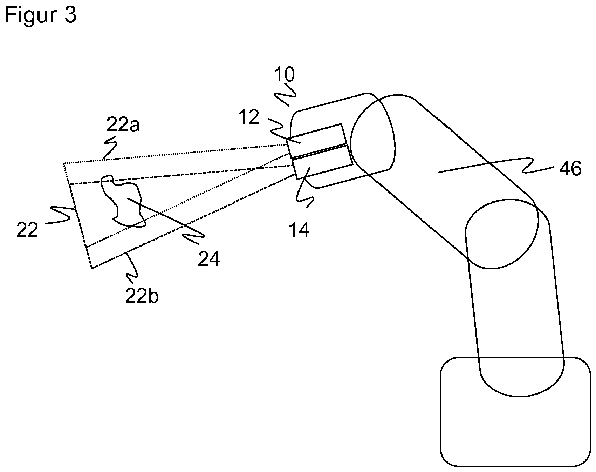

Figur 3 zeigt eine beispielhafte Anwendung der Sensorvorrichtung 10 in Montage an einem Roboterarm 46 zu dessen Absicherung als berührungslos wirkende Schutzeinrichtung (BWS). In dieser Anwendung beobachtet die Sensorvorrichtung 10 den dreidimensionalen Raum um eine insbesondere bewegliche potentielle Gefahrenquelle aus der Egoperspektive, hier beispielhaft eine Werkzeugspitze des Roboters (EOAS, Endof-Arm Safeguarding) für eine Zusammenarbeit mit einem Werker (MRK, Mensch-Roboter-Kollaboration).

Erfindungsgemäß entsteht eine sichere, diversitär-redundante Sensorvorrichtung 10 mit einem von dem optoelektronischen Abstandssensor 12, insbesondere einem Lichtlaufzeitsystem, und einem von dem Radarsensor 14, insbesondere mit einem Dopplerverfahren, gebildeten Kanal. Damit werden die für das Sicherheitskonzept, vorzugsweise Speed and Separation Monitoring, nötigen kinematischen Größen im Sinne der einschlägigen Normen sicher gemessen.

Diese Kombination von Sensoren 12, 14 hat den Vorteil, dass seine Konstituenten nahezu disjunkte Stärken und Schwächen haben, was zu einem erhöhten Sicherheits- oder Performancelevel und zu einer erhöhten Verfügbarkeit der Sensorvorrichtung 10 führt. Beispielsweise hat ein optisches Messprinzip eine wesentlich höhere Lokalisierungsgenauigkeit, während Radar sich von spiegelnden Oberflächen oder Sichttrübungen durch Staub oder, im Außenbereich, Nebel und Regen kaum stören lässt.

Besonders vorteilhaft ist, dass mittels Radar und Dopplerverfahren eine direkte Messung der relevanten Vektorkomponente der Geschwindigkeit auf der Verbindungslinie zum Montageort der Sensorvorrichtung 10 möglich ist. Das ist mit optischen Messprinzipien nur indirekt über eine zeitliche Ableitung des Distanzsignals möglich, die durch die Indirektion und beispielsweise auch aufgrund der limitierten und möglicherweise leicht schwankenden Messwiederholrate nur begrenzte Präzision erlaubt.

Somit besteht die Möglichkeit, beide für Speed and Separation Monitoring relevanten kinematischen Messgrößen Abstand und Geschwindigkeit direkt zu messen. Die optische Abstandsmessung kann zugleich mittels Radarabstandsmessung, die Geschwindigkeitsmessung des Radars mittels zeitlicher Ableitung der optischen Abstandsmessung überprüft werden, so dass auch beide kinematischen Messgrößen diversitär-redundant erfassbar und überprüfbar sind.

Die Möglichkeiten der diversitär-redundanten Bestimmung von kinematischen Größen werden in der nachfolgenden Tabelle noch einmal zusammengefasst. Die Sensorvorrichtung 10 kann, wie oben erläutert, auch nur einen Teil dieser kinematischen Größen messen beziehungsweise bestimmen.

| ***Kinematischer Parameter*** | ***Optischer Sensor*** | ***Radarsensor*** |
|---|---|---|
| Abstand s | Direkte Messung | Direkte Messung |
| Geschwindigkeit v | Erwartungshaltung via ds/dt | Direkte Messung |
| Beschleunigung a | Erwartungshaltung via d²s/dt² oder dv/dt | Erwartungshaltung via dv/dt oder d²s/dt² |

Die gemeinsame Steuer- und Auswertungseinheit 16 oder ein übergeordnetes System kann diese Messdaten zusätzlich mit anderen Zielen auswerten als einer sicherheitstechnischen Überwachung. So lassen sich dem Roboterarm 46 berührungslos Steuerbefehle erteilen, insbesondere durch Gestensteuerung. Um nur ein Beispiel zu nennen, ist denkbar, eine offene, zum Roboterarm 46 gerichtete Hand zu erkennen, wodurch dem Roboterarm 46 auch vor einer sicherheitsrelevanten Annährerung und damit Gefährdung ein Verlangsamen, Anhalten oder Zurückweichen signalisiert werden soll.

Die von der Sensorvorrichtung 10 bereitgestellten kinematischen Größen sind besonders geeignet für Speed and Separation Monitoring. Dennoch bleiben auch klassische Schutzfeld- oder Schutzraumkonzepte möglich, die bei entsprechend komplexer und dynamischer oder umschaltbarer Definition der Schutzfeldgeometrien eine zumindest rudimentäre Realisierung eines Separation Monitorings erlauben.

Die in Figur 3 illustrierte Anwendung an einem Roboterarm 46 oder einem Roboter ist besonders bevorzugt. Der Einsatz ist aber auch an anderen mobilen Plattformen möglich, wie mobile Roboterplattformen, autonomen Fahrzeugen oder für eine Kollisionsvermeidung bei Drohnen. Ein stationärer Einsatz ist vorstellbar.

Aus den erläuterten Gründen ist eine diversitär-redundante Kombination von Licht und Radar besonders vorteilhaft. Andere Sensorprinzipien lassen sich auf ähnliche Weise kombinieren, etwa Ultraschall und Radar.

## Patentansprüche

1. Sichere Sensorvorrichtung (10) zur Montage an einer beweglichen Maschine (46) zu deren Absicherung, die einen optoelektronischen Abstandssensor (12) zur Erfassung von Objekten (24) in einer Umgebung (22) der Maschine (46) und zum Messen eines Abstands (s) zu den Objekten (24) sowie eine Steuer- und Auswertungseinheit (16) aufweist, die dafür ausgebildet ist, ein sicherheitsgerichtetes Signal zu erzeugen, sobald ein Objekt (24) zu nahe kommt,
**dadurch gekennzeichnet,**
**dass** die Sensorvorrichtung (10) weiterhin einen Radarsensor (14) aufweist, um den Abstand (s) zu den Objekten (24) und/oder die Geschwindigkeit (v) der Objekte (24) zu messen.

2. Sensorvorrichtung (10) nach Anspruch 1,
wobei der Radarsensor (14) für eine Abstandsmessung mit einem Laufzeitverfahren ausgebildet ist.

3. Sensorvorrichtung (10) nach Anspruch 1 oder 2,
wobei der Radarsensor (14) für eine Geschwindigkeitsmessung mit einem Dopplerverfahren ausgebildet ist.

4. Sensorvorrichtung (10) nach einem der vorhergehenden Ansprüche,
wobei die Steuer- und Auswertungseinheit (16) dafür ausgebildet ist, das sicherheitsgerichtete Signal in Abhängigkeit von Abstand (s) und Geschwindigkeit (v) der erfassten Objekte (24) zu erzeugen.

5. Sensorvorrichtung (10) nach einem der vorhergehenden Ansprüche,
wobei die Steuer- und Auswertungseinheit (16) dafür ausgebildet ist, aus Abständen (s) und/oder Geschwindigkeiten (v) der erfassten Objekte (24) einen Steuerbefehl zu erkennen.

6. Sensorvorrichtung (10) nach einem der vorhergehenden Ansprüche,
wobei die Steuer- und Auswertungseinheit (16) dafür ausgebildet ist, die Geschwindigkeit (v) erfasster Objekte (24) aus einer zeitlichen Ableitung mehrerer Abstandsmessungen (s) zu bestimmen.

7. Sensorvorrichtung (10) nach einem der vorhergehenden Ansprüche,
wobei die Steuer- und Auswertungseinheit (16) dafür ausgebildet ist, die Beschleunigung (a) erfasster Objekte (24) aus einer zeitlichen Ableitung mehrerer Geschwindigkeitsmessungen (v) zu bestimmen.

8. Sensorvorrichtung (10) nach einem der vorhergehenden Ansprüche,
wobei der optoelektronische Abstandssensor (12) einen Lichtsender (18), einen Lichtempfänger (28) und eine Lichtauswertungseinheit (30) umfasst, die dafür ausgebildet ist, einen Abstand (s) aus einer Lichtlaufzeit eines von dem Lichtsender (18) ausgesandten und in dem Lichtempfänger (28) wieder empfangenen Lichtsignals zu bestimmen.

9. Sensorvorrichtung (10) nach einem der vorhergehenden Ansprüche,
die mindestens einen weiteren Sensor für eine Bestimmung einer Eigenbewegung der beweglichen Maschine (46) aufweist.

10. Bewegliche Maschine (46), insbesondere Roboterarm, mit einer sicheren Sensorvorrichtung (10) nach einem der vorhergehenden Ansprüche.

11. Verfahren zur Absicherung einer beweglichen Maschine (46), bei dem mit einem an der beweglichen Maschine (46) montierten optoelektronischen Abstandssensor (12) Objekte (24) in einer Umgebung (22) der Maschine (46) erfasst und ein Abstand (s) zu den Objekten (24) gemessen wird, wobei ein sicherheitsgerichtetes Signal erzeugt wird, sobald ein Objekt (24) der Maschine (46) zu nahe kommt,
**dadurch gekennzeichnet,**
**dass** der Abstand (s) zu den Objekten (24) und/oder die Geschwindigkeit (v) der Objekte (24) mit einem an der beweglichen Maschine (46) montierten Radarsensor (14) gemessen wird.
